# EUROPÄISCHE PATENTSCHRIFT

(11) **EP 3 287 797 B1**
(45) Veröffentlichungstag und Bekanntmachung des Hinweises auf die Patenterteilung: **06.03.2019**
(21) Anmeldenummer: 17183497.1
(22) Anmeldetag: 27.07.2017
(51) Int. Cl.: G01R 31/02

(54) **ÜBERWACHUNG EINES OPTISCHEN KONVERTERS**
MONITORING OF AN OPTICAL CONVERTER
SURVEILLANCE D'UN CONVERTISSEUR OPTIQUE

(30) Priorität: 22.08.2016 DE 102016115493
(43) Veröffentlichungstag der Anmeldung: 28.02.2018
(73) Patentinhaber: OSRAM GmbH, 80807 München (DE)
(72) Erfinder: Richter, Jens, 93180 Deuerling (DE); Vogt, Peter, 93309 Kelheim (DE)
(74) Vertreter: Hofstetter, Schurack & Partner

(56) Entgegenhaltungen:
- WO-A1-2015/078482
- DE-B3-102005 012 405
- DE-B3-102014 014 852

## Beschreibung

Die vorliegende Erfindung betrifft eine Schaltungsvorrichtung zum Überwachen eines optischen Konverters. Darüber hinaus betrifft die vorliegende Erfindung eine Konverteranordnung mit einer solchen Schaltungsvorrichtung. Schließlich betrifft die vorliegende Erfindung auch eine Beleuchtungseinrichtung mit der genannten Konverteranordnung.

Das der Erfindung zugrundeliegende Problem ergibt sich aus der Notwendigkeit der Überwachung eines Konversionselements. Dieses übernimmt die Funktion, eintreffendes Licht einer bestimmten Wellenlänge in Richtung einer anderen Wellenlänge zu konvertieren, aber auch das eintreffende Licht in gewissem Umfang gestreut zu transmittieren. Da in bestimmten Fällen das eintreffende Licht von einem Laser stammt, ist die Konversion als auch die Streuung desselben für den gefahrlosen Einsatz der Quelle zwingend notwendig. Um dies gewährleisten zu können, kann die hierfür vorgesehene Sensorik sowohl optisch als auch in Form einer ringförmigen Metallisierung ausgeführt sein. Die ringförmige Metallisierung kann auf der Oberfläche des Konverters um einen kreisförmigen Konversionsbereich herum angeordnet sein. Sie ist an einer Stelle des Rings offen, weswegen ihr Widerstand als Leiterschleife überwacht werden kann. Bei einem Riss des Konverters wird in der Regel auch die ringförmige Metallisierung unterbrochen, was sich in der entsprechenden Widerstandsmessung wiederspiegelt.

Der wesentliche Nachteil einer derart einfachen ringförmigen Struktur liegt darin, dass es durchaus im Bereich des Möglichen liegt, dass ein Riss des Konverters entsteht, der nicht zu einer Trennung der Leiterbahn führt. Vielmehr kann der Riss beispielsweise durch die bereits vorgesehene Öffnung des Rings verlaufen.

Die messtechnische Erfassung der Leiterbahnschleife erfolgt bisweilen mittels Strommessung oder basierend auf einem Spannungsteiler. Eine derart einfache Strommessung ist jedoch nicht hinreichend, um die Erblindung des Systems durch zum Beispiel die Überbrückung des offenen Bereichs der Leiterbahnschleife sicher zu detektieren. Alternative bekannte Verfahren zur Überwachung des Konverters bestehen in der kontaktlosen Vermessung der Leiterschleifen über kapazitive oder induktive Methoden. Die WO2015/078482 zeigt eine bekannte Schaltungsvorrichtung zur Detektion von Leitungsbrüchen oder Kurzschlüssen bei einem MEMS Spiegel.

Die Aufgabe der vorliegenden Erfindung besteht somit darin, den Defekt eines Konverters messtechnisch zuverlässiger erfassen zu können.

Erfindungsgemäß wird diese Aufgabe durch eine Schaltungsvorrichtung nach Anspruch 1 gelöst. Vorteilhafte Weiterbildungen der Erfindung ergeben sich aus den Unteransprüchen.

Entsprechend der vorliegenden Erfindung wird demnach eine Schaltungsvorrichtung zum Überwachen eines optischen Konverters bereitgestellt. Die Überwachung dient dazu, einen Defekt des optischen Konverters, der z.B. Laserlicht zumindest teilweise in andere Wellenlängen konvertiert, zuverlässig zu erkennen. Dazu besitzt die Schaltungsvorrichtung eine Messbrücke mit einem Messzweig, einem ersten Vergleichszweig und einem zweiten Vergleichszweig. In den Messzweig ist eine Leiterbahnschleife des Konverters integrierbar. Dies bedeutet, dass die Leiterbahnschleife beispielsweise als Serienelement in den Messzweig geschlossen werden kann. So kann sie beispielsweise anhand ihres Widerstands analysiert werden.

Der erste Vergleichszweig weist einen über ein erstes aktives Element variablen ersten Vorwiderstand auf. Dies bedeutet, dass die Leiterbahnschleife im Messzweig mit einem bestimmten Widerstand, z.B. hinsichtlich eines unteren Schwellwerts, verglichen werden kann. Dieser erste Vergleichszweig ist variabel, indem sein Vorwiderstand über das erste aktive Element (z.B. ein steuerbarer Schalter) variiert wird. Ebenso besitzt der zweite Vergleichszweig einen über ein zweites aktives Element variablen zweiten Vorwiderstand. Somit ist die Leiterbahnschleife in dem Messzweig auch vergleichbar mit einem weiteren Wert (z.B. oberen Schwellwert) des zweiten Vergleichszweigs. Dieser wiederum ist z.B. mittels eines aktiven Schalters in Bezug auf seinen Vorwiderstand variabel.

Das erste und das zweite aktive Element in dem ersten beziehungsweise zweiten Vergleichszweig sind jeweils mit einem gleichen Ansteuersignal ansteuerbar. Somit können die Steuereingänge der beiden aktiven Elemente miteinander verbunden sein.

Darüber hinaus besitzt die Schaltungsvorrichtung eine Auswerteschaltung mit einem ersten Komparator und einem zweiten Komparator, deren Ausgänge UND-verknüpft das Ansteuersignal und gleichzeitig ein Ausgangssignal der Schaltungsvorrichtung bilden. Neben der Messbrücke ist also eine Komparatorschaltung mit zwei Komparatoren vorgesehen, sodass ein Vergleich mit zwei Schwellwerten durchgeführt werden kann. Die Ausgänge der beiden Komparatoren sind logisch UND-verknüpft, sodass also die beiden Bedingungen der Komparatoren erfüllt sein müssen, damit das gemeinsame Ausgangssignal der Komparatoren eine logische "1" liefert. In vorteilhafter Weise wird nun dieses gemeinsame Ausgangssignal zum Ansteuern der aktiven Elemente des ersten und zweiten Vergleichszweigs verwendet und somit auf die Messbrücke rückgekoppelt. Gleichzeitig stellt das gemeinsame Ausgangssignal der Komparatoren das Ausgangssignal der gesamten Schaltvorrichtung dar, entsprechend dem der überwachte optische Konverter als defekt oder nicht defekt eingestuft wird.

Der erste Komparator vergleicht einen Abgriff des ersten Vergleichszweigs mit einem Abgriff des Messzweigs und der zweite Komparator vergleicht einen Abgriff des zweiten Vergleichszweigs mit einem Abgriff des Messzweigs. Somit lässt sich der Messzweig beziehungsweise die Leiterbahnschleife mit zwei verschiedenen Referenzwerten (z.B. unterer Schwellwert und oberer Schwellwert) vergleichen, wobei diese Referenzwerte in der Messbrücke rückgekoppelt über den Ausgang der Komparatoren variabel gehalten werden. Damit erfolgt beispielsweise der Übergang von der Einstufung als fehlerfrei zu der Einstufung als fehlerbehaftet bei einem höheren Widerstandswert der Leiterbahnschleife als umgekehrt.

Vorzugsweise handelt es sich bei dem ersten aktiven Element um einen Metalloxid-Halbleiter und insbesondere um einen PMOS-Schalter. In gleicher Weise ist es vorteilhaft, wenn das zweite aktive Element in dem zweiten Vergleichszweig ebenfalls ein Metalloxid-Halbleiter und insbesondere ein NMOS-Schalter ist. Bei diesem Halbleiterschaltungstypen handelt es sich um günstige und zuverlässige Schalter, die eine hohe Packungsdichte gewährleisten.

In einer Ausgestaltung der Schaltungsvorrichtung weist der erste Vergleichszweig für einen unteren Schwellwert einen anderen Referenzwiderstand auf als der zweite Vergleichszweig für einen oberen Schwellwert. Damit können bereits von vornherein unabhängig von der Variabilität der Vorwiderstände in den Vergleichszweigen zwei verschiedene Schwellwerte vorgegeben werden.

Bei einer vorteilhaften Anwendung der erfindungsgemäßen Schaltungsvorrichtung ist eine Konverteranordnung mit einem optischen Konverter, auf dem eine Leiterschleife zu dessen Überwachung angeordnet ist, und eine Schaltungsanordnung gemäß obiger Ausführungen vorgesehen, die an die Leiterschleife angeschlossen ist. Es kann also konkret die Leiterschleife des Konverters mit der Schaltungsvorrichtung überwacht werden.

In einer besonders bevorzugten Ausgestaltung ist die Leiterschleife auf einer Oberfläche des Konverters ausgebildet und besitzt die Form eines Mäanders, wobei mindestens eine Teilschleife des Mäanders einen kreisförmigen Konversionsbereich des Konverters vollständig umläuft. Dabei ist in der Regel auch vorgesehen, dass die Leiterschleife nach einer Umkehr einen ähnlichen Weg wieder zurückläuft. Eine derartige Gestaltung der Leiterschleife garantiert, dass über den Konversionsbereich in der Regel kein Riss von innen nach außen verlaufen kann, ohne die Leiterschleife mindestens einmal zu durchtrennen.

Insgesamt kann also eine Beleuchtungseinrichtung mit einer Laserdiode und einer Konverteranordnung der geschilderten Art bereitgestellt werden, wobei die Laserdiode mittels des Ausgangssignals der Schaltungsvorrichtung gesteuert wird. Damit kann ein sicherer Betrieb der laserbasierten Beleuchtungseinrichtung erreicht werden.

In einer Weiterentwicklung können eine Anode der Laserdiode über ein von dem Ausgangssignal steuerbares erstes Halbleiterschalterelement und eine Kathode der Laserdiode über ein von dem Ausgangssignal steuerbares zweites Halbleiterschaltelement separat an Versorgungsanschlüsse geschaltet sein. Es besteht also eine redundante Abschaltmöglichkeit für die Laserdiode. Hierdurch ist die Sicherheitsstufe deutlich erhöht.

Des Weiteren kann das erste Halbleiterschalterelement über einen Inverter von dem Ausgangssignal der Schaltungsvorrichtung angesteuert sein. Dies hat den Vorteil einer geringeren Leistungsaufnahme.

Gemäß einer weiteren vorteilhaften Ausführungsvariante ist über die Versorgungsanschlüsse der Laserdiode auch eine Versorgung der übrigen Beleuchtungseinrichtung gewährleistet. Da die Schaltvorrichtung gegenüber der Laserdiode nur einen geringen Stromverbrauch hat, ist eine separate Versorgung der Schaltungsvorrichtung in aller Regel nicht notwendig. Dies führt zu einer schaltungstechnischen Vereinfachung und bringt daher Montage- und Kostenvorteile.

Die vorliegende Erfindung wird nun anhand der beigefügten Zeichnungen näher erläutert, in denen zeigen:
- Fig. 1: ein Konverterelement mit mäanderförmiger Leiter (bahn)schleife;
- Fig. 2: eine Brückenschaltung zur Bewertung einer Widerstandsänderung einer Leiterschleife;
- Fig. 3: eine Komparatorschaltung zur Bewertung des Ausgangs der Brückenschaltung;
- Fig. 4: Ausgangsspannungen der einzelnen Komparatoren; und
- Fig. 5: eine Darstellung der Funktion der internen Rückkopplung.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Merkmalskombinationen, sondern auch in Alleinstellung oder in anderen technisch sinnvollen Merkmalskombinationen realisiert werden können.

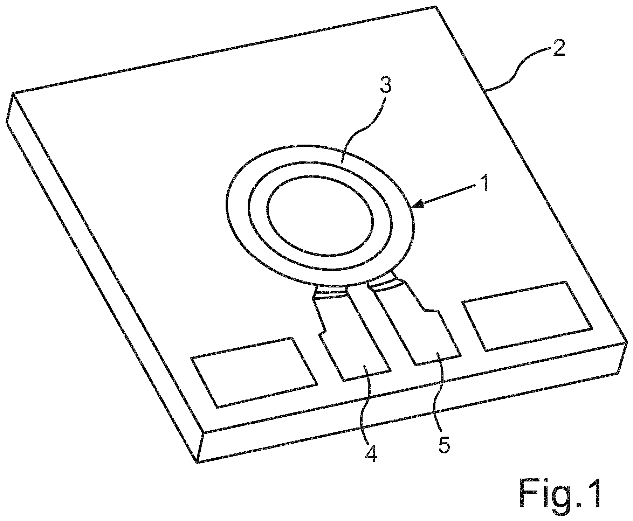

Zunächst soll anhand von Fig. 1 ein Konverterelement beschrieben werden, das zur Konversion von Laserlicht verwendet werden kann. Ein derartiges Konverterelement kann bei einer Beleuchtungseinrichtung, z.B. bei einem Kraftfahrzeugscheinwerfer, verwendet werden.

Der eigentliche Konverter 1 ist kreisrund ausgebildet und an ein Substratplättchen 2, das beispielsweise aus Saphir gebildet ist, angebunden. Die Oberfläche des Konverters 1 ist mit einer Leiterbahnschleife 3 beschichtet. Die Leiterbahnschleife besitzt die Form eines Mäanders und ihre Enden münden in Lötanschlüsse 4 und 5 auf dem Substrat 2. Ausgehend von dem Lötanschluss 4 verläuft die Leiterbahnschleife in einem ersten Kreis fast vollständig am Außenrand des kreisförmigen Konverters entlang. Der erste Kreis besitzt einen ersten Radius. Weiter verläuft die Leiterbahnschleife radial nach innen, bis ein dritter Radius erreicht ist, der einen dritten Kreis definiert, entlang dem die Leiterschleife wiederum fast vollständig in der Richtung wie auf dem ersten Kreis läuft. Am Ende dieses fast vollständigen dritten Kreises verläuft die Leiterbahnschleife radial nach außen bis zu einem zweiten Radius, der einen zweiten Kreis definiert, welcher zwischen dem ersten und dem dritten Kreis liegt. Auf diesem zweiten Kreis läuft die Leiterbahnschleife bezogen auf die Richtung auf dem ersten Kreis zurück bis zu dem zweiten Lötanschluss 5 und beschreibt dabei wiederum fast einen vollständigen Kreis. Die Leiterbahnschleife besitzt damit drei konzentrische Teilschleifen, die auf dem ersten, zweiten und dritten Kreis liegen.

Es ist ebenfalls eine einfachere Form der Mäanderstruktur denkbar, welche zwar optische Nachteile hätte, jedoch nur aus zwei Schleifen bestünde. Entscheidend bei der Mäanderstruktur ist eine Form, welche keine freie, radial nach außen laufende Konverterfläche zulässt.

Die Ausgestaltung der Schleife bietet zum einen den Vorteil, dass kein Riss vom Rand bis zur Mitte des Konverters entstehen kann, ohne die Leiterbahnschleifen zu verletzen. Ausgenommen sei dabei ein vollständig umlaufender Riss, der technisch nicht plausibel ist. Dass ein Riss des Konverters die Metallisierung (z.B. aus Aluminium) in Mitleidenschaft zieht, ist über das Verhältnis der Stärken von z.B. 650/35 (Konverter-zu-Mäander-Stärke) als auch über die Haftung der Metallschicht auf dem Konverter sichergestellt.

Darüber hinaus bietet diese Ausführung der Leiterbahnschleife die Möglichkeit, den Widerstandswert durch die Maximierung der Länge bei entsprechender Reduktion der Breite zu erhöhen. Dies wiederum erhöht die Messsicherheit, da der Einfluss der Zuleitungswiderstände entsprechend sinkt.

Die annähernd vollständig kreisförmige Leiterbahnschleife hat weiterhin die Funktion einer Blende. Eine derartige ringförmige Blende ist bei Laser-Konverter-Anwendungen notwendig, um Anteile des Laserstrahls und konvertiertes Licht am Rand, die eine geringere Intensität besitzen, auszublenden. Nur so kann sichergestellt werden, dass das Verhältnis von konvertiertem und nicht konvertiertem Licht in gewünschter Weise eingehalten wird.

Die Anforderung an die Sensorik ist, eine Widerstandsänderung über und insbesondere unter einem bestimmten Schwellwert zu erkennen. Die Überschreitung des Schwellwerts deckt dabei die beschriebene Beschädigung des Konverters (der sicherheitskritische Fehlerfall) ab. Die Unterschreitung hingegen berücksichtigt den Fehlerfall, der die Sensorik erblinden lassen würde. Werden nämlich beispielsweise die Lötanschlüsse 4 und 5 durch ein Metallteil überbrückt, könnte eine Beschädigung des Konverters nicht mehr detektiert werden. Aus diesem Grund ist auch dies ein Fehler, der zum Deaktivieren der Quelle von Seiten der Elektronik führen muss.

Eine weitere Anforderung, die sich aus der Applikation ergibt, ist die Implementierung einer Hysterese bei der Widerstandsdetektion. Befindet sich nämlich der zu überwachende Widerstand der Leiterbahnschleife aufgrund unterschiedlicher Einflüsse nahe dem Schwellwert, kann dies durch schwankende Umgebungsbedingungen (wie Temperatur) als auch durch Schwankungen der internen Parameter (wie Versorgungsspannung) dazu führen, dass die Leiterschleife ständig schwankend als fehlerhaft oder nicht fehlerhaft erkannt wird. Dies hätte zur Folge, dass das System sich gegenüber seiner Umwelt wechselweise in Abhängigkeit von den Randbedingungen als fehlerhaft und nicht fehlerhaft ausweist.

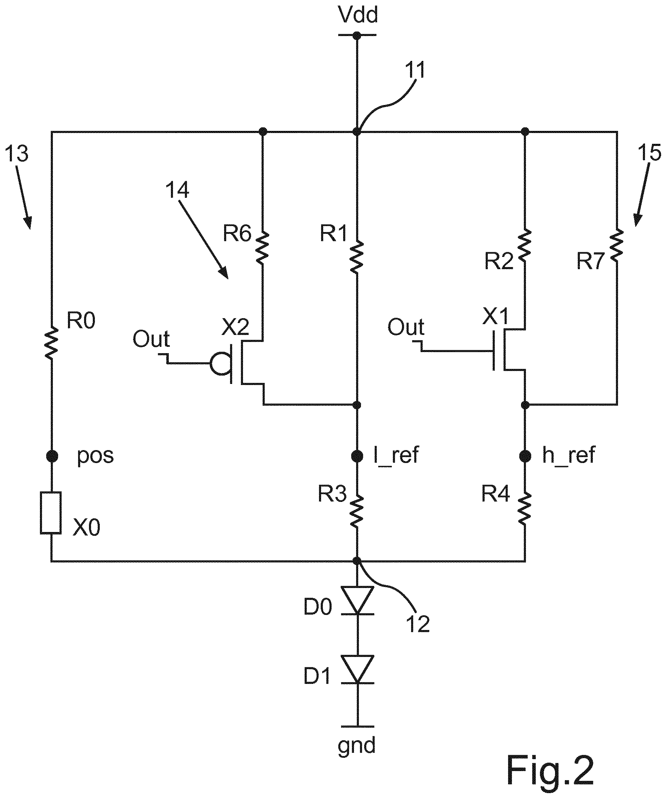

Es wird daher im Rahmen einer Schaltungsvorrichtung zur Überwachung des optischen Konverters 3 eine Brückenschaltung gemäß Fig. 2 eingesetzt, die zur Bewertung einer Widerstandsänderung der Leiterschleife des Konverters dient.

Eine Komponente X0 symbolisiert dabei die Leiterbahnschleife des Konverters, die als ohmscher Widerstand betrachtet werden kann. Als Vergleichswiderstände für einen oberen Schwellwert ist ein Widerstand R4 und für einen unteren Schwellwert ein Widerstand R3 vorgesehen. In der Grundfunktion entspricht die dargestellte Schaltung einer Brückenschaltung oder Messbrücke.

Die Brücke befindet sich zwischen einem ersten Knoten 11, der mit meinem Versorgungsanschluss Vdd verbunden ist und einem zweiten Knoten 12, der hier rein optional über zwei Dioden D0 und D1 mit Masse gnd verbunden ist. Zwischen dem ersten Knoten 11 und dem zweiten Knoten 12 befinden sich parallel ein Messzweig 13, ein erster Vergleichszweig 14 und ein zweiter Vergleichszweig 15.

Der Messzweig 13 weist neben der Leiterbahnschleife X0, die an die Messbrücke anzuschließen ist, in Serie einen Vorwiderstand R0 auf. Zwischen der Leiterbahnschleife X0 und dem Widerstand R0 kann ein Messpotential pos abgegriffen werden.

Der erste Vergleichszweig 14 besitzt einen Widerstand R3 in Serie mit einem Widerstand R1. Parallel zu dem Widerstand R1 befindet sich eine Serienschaltung eines Widerstands R6 mit einem PMOS-Schalter X2. Dessen Eingang wird von einem Steuersignal Out gesteuert. Zwischen dem Widerstand R1 und dem Widerstand R3 befindet sich ein Abgriff für ein Potential l_ref des unteren Schwellwerts.

Der zweite Vergleichszweig 15 ist analog zu dem ersten Vergleichszweig 14 aufgebaut. Zwischen dem ersten Knoten 11 und dem zweiten Knoten 12 befindet sich eine Reihenschaltung eines Widerstands R4 und eines Widerstands R7. Parallel zu dem Widerstand R7 befindet sich eine Serienschaltung eines Widerstands R2 mit einem steuerbaren Schalter X1, welcher vorzugsweise als NMOS-Schalter ausgebildet ist. An seiner Steuerelektrode liegt das gleiche Steuersignal Out wie bei dem steuerbaren Schalter X2 des ersten Vergleichszweigs 14 an. Zwischen dem Widerstand R7 und dem Widerstand R4 kann an einem Abgriff das Potential h_ref für den oberen Schwellwert abgegriffen werden.

Während also in dem Messzweig 13 ein fester Vorwiderstand R0 vorgesehen ist, befindet sich in dem ersten Vergleichszweig 14 ein Vorwiderstand, der aus den Komponenten R1, R6 und X2 gebildet ist. Dieser Vorwiderstand ist über den Schalter X2 variabel. In gleicher Weise umfasst der Vorwiderstand im zweiten Vergleichszweig 15 die Komponenten R2, R7 und X1. Auch dieser ist über den Schalter X1 variabel. Insbesondere ermöglichen es die beiden aktiven Elemente X1 und X2, die Vorwiderstände in den Vergleichszweigen über das Ansteuersignal Out anzupassen.

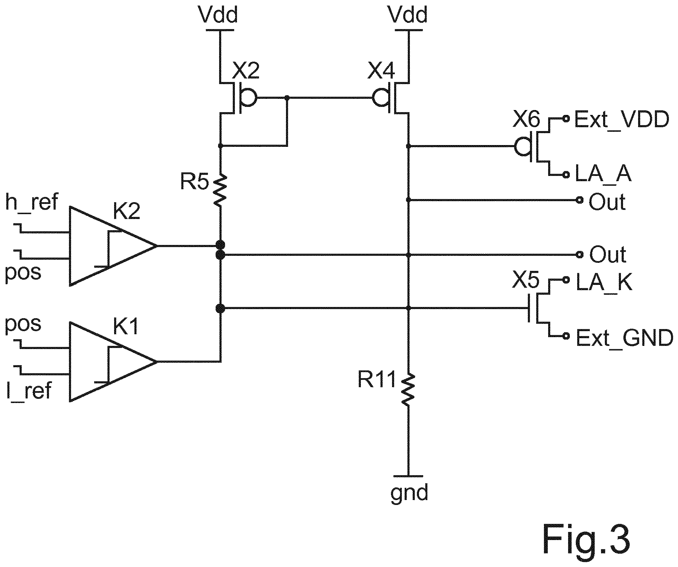

In Fig. 3 ist die entsprechende Auswerteschaltung der Schaltungsvorrichtung zum Überwachen des optischen Konverters dargestellt. Diese Auswerteschaltung stellt auch das Ansteuersignal Out für die aktiven Elemente X1 und X2 der Brückenschaltung von Fig. 2 bereit. Eingangsseitig sind ein erster Komparator K1 und ein zweiter Komparator K2 vorgesehen. Der erste Komparator K1 vergleicht das Messpotential pos mit dem Potential l_ref im ersten Referenzzweig 14 der Brückenschaltung. Ebenso vergleicht der zweite Komparator K2 das Vergleichspotential h_ref mit dem Messpotential pos. Die Ausgangssignale der beiden Komparatoren K1 und K2 werden durch die jeweiligen "Open Collector"-Ausführungen logisch UND-verknüpft. Das resultierende Signal stellt das Ausgangssignal Out der Schaltungsvorrichtung dar.

Das Ausgangssignal Out wird auch zum Schalten einer in Fig. 3 nicht dargestellten Laserdiode einer entsprechenden Beleuchtungseinrichtung verwendet. In Fig. 3 sind lediglich die Anschlüsse LA_A und LA_K dargestellt, über die die Anode und die Kathode der Laserdiode anschließbar sind. Der Anschluss LA_A ist über die Drain-Source-Strecke eines PMOS-Schalters X6 an ein externes Versorgungspotential Ext_VDD angeschlossen. Demgegenüber ist der Kathodenanschluss LA_K über eine Drain-Source-Strecke eines NMOS-Schalters X5 an eine externe Masse Ext_GND angeschlossen. Das Gate des NMOS-Schalters X5 erhält das Ausgangssignal Out. Demgegenüber erhält das Gate des PMOS-Schalters X6 das invertierte Ausgangssignal -Out über einen Inverter X2, X4 und einen Widerstand R5 vom Ausgang der Komparatoren K1 und K2. Das invertierte Ausgangssignal -Out ist über einen Widerstand R11 auf Masse gnd gelegt. Der Inverter X2, X4 wird mit einer Versorgungsspannung Vdd gespeist.

Die beiden Ausgangstransistoren X5 und X6 verbinden die Anode und Kathode der Laserdiode mit der entsprechenden Versorgung. Das heißt, im Fehlerfall (das Ausgangssignal ist logisch "0") werden die Anode und die Kathode der Laserdiode von der Versorgung getrennt.

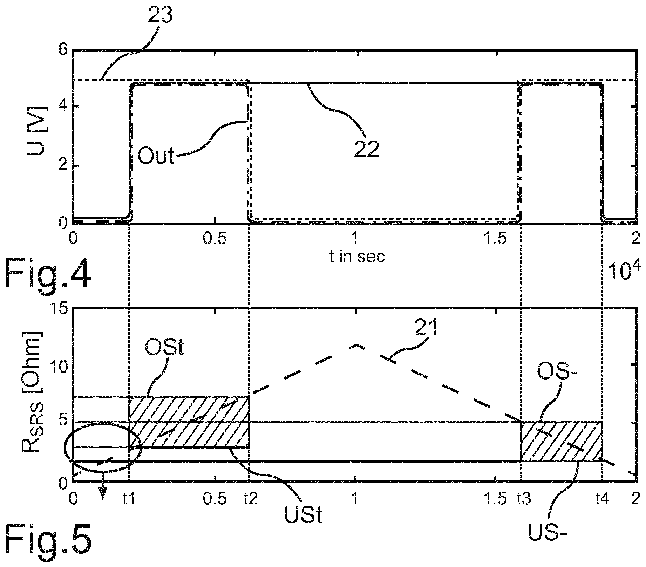

Aus den Fig. 4 und 5 ergibt sich die Funktionsweise der gesamten Schaltvorrichtung einschließlich Messbrücke und Komparatorschaltung. Das Signal R_{SRS} über der Zeit t beschreibt einen fiktiven Verlauf des Widerstands der Leiterbahnschleife des Konverters. Zum Verständnis der Schaltung wird hier angenommen, dass der Widerstand R_{SRS} der Leiterschleife entsprechend dem Verlauf 21 in Fig. 5 zunächst linear ansteigt und anschließend wieder linear abfällt. Ist der Widerstand R_{SRS} sehr niedrig, so liegt ein Fehler bei dem Konverter vor. Gleiches gilt, wenn der Widerstand R_{SRS} zu hoch ist.

Bei dem linearen Anstieg liegt zunächst ein fehlerhaft niedriger Widerstand R_{SRS} vor. Bei dem Zeitpunkt t1 überschreitet der Widerstand einen hohen unteren Schwellwert us+. Nach einem weiteren Anstieg überschreitet der Widerstand R_{SRS} den hohen oberen Schwellwert os+. In dem Bereich zwischen den beiden Schwellwerten us+ und os+, der in Fig. 5 schraffiert ist, liegt ein fehlerfreier Zustand des Konverters vor.

Nach dem Zeitpunkt t2 steigt der Widerstand R_{SRS} weiter und deutet daher einen fehlerhaften Zustand des Konverters an. In dem fallenden Bereich des Widerstandsverlaufs 21 soll nicht gleich wieder bei einem hohen oberen Schwellwert os+ ein fehlerfreier Zustand (vergleiche schraffierter Bereich) angedeutet werden. Daher wird ein niedriger oberer Schwellwert os- verwendet, um sicher einen fehlerfreien Zustand zu signalisieren. Im weiteren Verlauf nach unten wird auch ein niedriger unterer Schwellwert us- verwendet, um anzudeuten, dass der Widerstand R_{SRS} den fehlerfreien Raum wieder verlassen hat.

Fig. 4 zeigt die entsprechenden Komparatorsignale 22 und 23 der Komparatoren K1 und K2. Der Verlauf 22 zeigt das Ausgangssignal des ersten Komparators K1 mit Bezug auf den Spannungspegel l_ref, der die Werte us+ und us- annehmen kann. Der Pegel des ersten Komparators K1 steigt beim Zeitpunkt t1 an und sinkt erst wieder zum Zeitpunkt t4 ab.

Der Pegelverlauf 23 in Fig. 4 zeigt den Ausgang des zweiten Komparators K2 bei dem künstlichen Widerstandsverlauf 21 von Fig. 5. Zunächst befindet sich der Ausgangspegel bis zum Zeitpunkt t2 auf hohem Niveau, sinkt bei t2 ab und steigt beim Zeitpunkt t3 wieder auf hohes Niveau. Durch die UND-Verknüpfung ergibt sich das Ausgangssignal Out der Schaltungsvorrichtung, das in Fig. 4 mit einer Strichpunktlinie dargestellt ist. Der Pegel des Ausgangssignals Out ist nur zwischen den Zeitpunkten t1 und t2 sowie zwischen den Zeitpunkten t3 und t4 hoch. Diese Zeiträume entsprechen dem fehlerfreien Zustand. Für die Ansteuerung der Laserdiode mit dem Ausgangssignal Out bedeutet dies, dass die Laserdiode nur im fehlerfreien Zustand des Konverters betrieben wird.

Nachfolgend wird kurz beschrieben, wie das Ausgangssignal Out mit der Brückenschaltung und der Komparatorschaltung zustande kommt. Nähert sich bei dem beispielhaften Widerstandsverlauf 21 gemäß Fig. 5 der Widerstand der Leiterschleife von geringen Werten dem hohen unteren Schwellwert us+, so ist das Ausgangssignal der Komparatorschaltung logisch "0". Damit ist der PMOS-Schalter X2 von Fig. 2 niederohmig und der NMOS-Schalter X1 hochohmig. Somit entspricht der Vorwiderstand des ersten Messzweigs 14 wegen der Parallelschaltung von R1 und R6 nicht dem Vorwiderstand R0 des Messzweigs. Vielmehr ist der Vorwiderstand R1∥R6 niederohmiger, was bedeutet, dass der Widerstand der Leiterbahnschleife (Messwiderstand) größer sein muss als der Vergleichswiderstand R3, um die Mittenspannung auszugleichen (entspricht 0V).

Überschreitet der Messwiderstand im weiteren Verlauf den erhöhten Schwellwert os+ (wegen der Parallelschaltung von R1 und R6), schaltet der Komparatorverbund auf logisch "1", womit der PMOS-Transistor X2 der Brückenschaltung von Fig. 2 schließt und der NMOS-Transistor X1 sich vollständig öffnet. Damit ist die Parallelschaltung der Widerstände R6 und R1 aufgehoben und der untere Schwellwert l_ref entspricht wiederum dem Nominalwert us-. Das heißt, fällt der Leitungswiderstand im weiteren Verlauf, muss nun dieser Wert unterschritten werden, um das System als defekt zu markieren.

Eine nahezu identische Betrachtung kann für den oberen Schwellwert h_ref durchgeführt werden. Im fehlerfreien Zustand ist das Ausgangssignal Out logisch "1", womit der NMOS-Transistor X1 niederohmig ist. Damit wirkt die Parallelschaltung aus den Widerständen R2 und R7 als Vorwiderstand in dem zweiten Vergleichszweig 15. Aus diesem Grund muss der Messwiderstand X0 den Schwellwert um einen bestimmten Betrag überschreiten, um die Mittenspannung zwischen dem Messzweig 13 und dem zweiten Vergleichszweig 15 auszugleichen. Es gilt der höhere obere Schwellwert os+. Im weiteren Verlauf schaltet der Komparatorverbund auf logisch "0", womit wiederum der NMOS-Transistor X1 hochohmig wird und damit nur der Widerstand R7 als Vorwiderstand wirksam ist. Somit ist wieder ein entsprechend niedrigerer oberer Schwellwert os- umgesetzt.

Durch das beschriebene Verfahren lässt sich ein unterschiedliches Verhalten der Schaltung erzeugen, je nachdem, ob der Widerstand einen fehlerfreien Zustand verlässt oder in einen fehlerfreien Zustand eintritt (vergleiche schraffierte Bereiche in Fig. 5). Dabei kann die umgesetzte Hysterese beispielsweise 2 Ohm bei einem Nominalwiderstand von 4 Ohm betragen.

Aufgrund der einfachen Ausführbarkeit der Schaltung sowie durch die Rückkopplung und die verwendete Verschaltung der Komparatoren ist es möglich, die Schaltung aus der Versorgung der Laserdiode zu speisen. Der notwendige Strom ist dabei typischerweise deutlich geringer als der notwendige Strom der Laserdiode (z.B. 1/1000). Ferner ist durch eine kostengünstig ausführbare Pufferung auch ein PWM-Betrieb des Lasers störungsfrei möglich.

Durch diese Ausführung ist eine Eigenabschaltung des Moduls im Fehlerfall möglich, ohne dass dies dem Steuergerät gemeldet werden muss und ohne dass ein zusätzlicher Anschluss am Stecker notwendig wird. Dies reduziert die Kosten und die Komplexität des Gesamtsystems.

### BEZUGSZEICHENLISTE

- 1: Konverter
- 2: Substratplättchen
- 3: Leiterbahnschleife
- 4, 5: Lötanschlüsse
- 11, 12: Knoten
- 13: Messzweig
- 14, 15: Vergleichszweig
- 21: Widerstandsverlauf
- 22, 23: Komparatorsignal
- D0, D1: Diode
- gnd: Masse
- Ext_gnd: Masse für Laserdiode
- Ext_Vdd: Versorgungsspannung für Laserdiode
- h_ref: oberes Schwellwertpotenzial
- K1, K2: Komparator
- LA_A, LA_K: Anschluss
- l_ref: unteres Schwellwertpotenzial
- os-: niedriger oberer Schwellwert
- os+: hoher oberer Schwellwert
- Out: Steuersignals
- pos: Messpotenzial
- R1 bis R7, R11: Widerstand
- t1 bis t4: Zeitpunkt
- us-: niedriger unterer Schwellwert
- us+: hoher unterer Schwellwert
- Vdd: Versorgungsspannung
- X0: Leiterbahnschleife
- X1 bis X6: Schalter

## Patentansprüche

1. Schaltungsvorrichtung zum Überwachen eines optischen Konverters (1)
**gekennzeichnet durch**
- eine Messbrücke mit einem Messzweig (13), einem ersten Vergleichszweig (14) und einem zweiten Vergleichszweig (15), wobei
- in den Messzweig (13) eine Leiterbahnschleife (3, X0) des Konverters integrierbar ist,
- der erste Vergleichszweig (14) einen über ein erstes aktives Element (X2) variablen ersten Vorwiderstand aufweist,
- der zweite Vergleichszweig (15) einen über ein zweites aktives Element (X1) variablen zweiten Vorwiderstand aufweist,
- das erste und zweite aktive Element (X2, X1) jeweils mit einem gleichen Ansteuersignal ansteuerbar sind,
- die Schaltungsvorrichtung eine Auswerteschaltung mit einem ersten Komparator (K1) und einem zweiten Komparator (K2) aufweist, deren Ausgänge UND-verknüpft das Ansteuersignal und gleichzeitig ein Ausgangssignal (Out) der Schaltvorrichtung bilden, wobei
- der erste Komparator (K1) einen Abgriff (l_ref) des ersten Vergleichszweigs (14) mit einem Abgriff (pos) des Messzweigs (13) vergleicht und
- der zweite Komparator (K2) einen Abgriff (h_ref) des zweiten Vergleichszweigs (15) mit einem Abgriff (pos) des Messzweigs vergleicht.

2. Schaltungsvorrichtung nach Anspruch 1, wobei das erste aktive Element (X2) ein Metalloxid-Halbleiter und insbesondere ein PMOS-Schalter ist.

3. Schaltungsvorrichtung nach Anspruch 1 oder 2, wobei das zweite aktive Element (X1) ein Metalloxid-Halbleiter und insbesondere ein NMOS-Schalter ist.

4. Schaltungsvorrichtung nach einem der vorhergehenden Ansprüche, wobei der erste Vergleichszweig (14) für einen unteren Schwellwert einen anderen Referenzwiderstand aufweist als der zweite Vergleichszweig (15) für einen oberen Schwellwert.

5. Konverteranordnung mit einem optischen Konverter (1), auf dem eine Leiterbahnschleife (3, X0) zu dessen Überwachung angeordnet ist, und einer Schaltungsvorrichtung nach einem der vorhergehenden Ansprüche, die an die Leiterbahnschleife (3, X0) angeschlossen ist.

6. Konverteranordnung nach Anspruch 5, wobei die Leiterbahnschleife (3, X0) auf einer Oberfläche des Konverters (1) ausgebildet ist und die Form eines Mäanders aufweist, und mindestens eine Teilschleife des Mäanders einen kreisförmigen Konversionsbereich des Konverters (1) vollständig umläuft.

7. Beleuchtungseinrichtung mit einer Laserdiode und einer Konverteranordnung nach Anspruch 5 oder 6, wobei die Laserdiode mittels des Ausgangssignals (Out) der Schaltungsvorrichtung gesteuert wird.

8. Beleuchtungseinrichtung nach Anspruch 7, wobei eine Anode der Laserdiode über ein von dem Ausgangssignal steuerbaren ersten Halbleiterschaltelement (X6) und eine Kathode der Laserdiode über ein von dem Ausgangssignal (Out) steuerbaren zweiten Halbleiterschaltelement (X5) separat an Versorgungsanschlüsse (Ext_VDD, Ext_GND) geschaltet sind.

9. Beleuchtungseinrichtung nach Anspruch 8, wobei das erste Halbleiterschaltelement (X6) über einen Inverter (X2, X4) von dem Ausgangssignal (Out) der Schaltungsvorrichtung angesteuert ist.

10. Beleuchtungseinrichtung nach Anspruch 8 oder 9, wobei über die Versorgungsanschlüsse der Laserdiode auch eine Versorgung der übrigen Beleuchtungseinrichtung gewährleistet ist.

## Claims

1. Circuit device for monitoring an optical converter (1)
**characterized by**
- a measurement bridge with a measurement branch (13), a first comparison branch (14) and a second comparison branch (15), wherein
- a conductor path loop (3, X0) of the converter can be integrated in the measurement branch (13),
- the first comparison branch (14) has a first series resistance variable via a first active element (X2),
- the second comparison branch (15) has a second series resistance variable via a second active element (X1),
- the first and the second active element (X2, X1) are each controllable by a same control signal,
- the circuit device has an evaluation circuit with a first comparator (K1) and a second comparator (K2), the outputs of which form the control signal and at the same time an output signal (Out) of the switching device in AND-gated manner, wherein
- the first comparator (K1) compares a tap (l_ref) of the first comparison branch (14) to a tap (pos) of measurement branch (13) and
- the second comparator (K2) compares a tap (h_ref) of the second comparison branch (15) to a tap (pos) of the measurement branch.

2. Circuit device according to claim 1, wherein the first active element (X2) is a metal oxide semiconductor and in particular a PMOS switch.

3. Circuit device according to claim 1 or 2, wherein the second active element (X1) is a metal oxide semiconductor and in particular an NMOS switch.

4. Circuit device according to any one of the preceding claims, wherein the first comparison branch (14) has a different reference resistance for a lower threshold value than the second comparison branch (15) for an upper threshold value.

5. Converter assembly with an optical converter (1), on which a conductor path loop (3, X0) for monitoring is disposed, and a circuit device according to any one of the preceding claims, which is connected to the conductor path loop (3, X0).

6. Converter assembly according to claim 5, wherein the conductor path loop (3, X0) is formed on a surface of the converter (1) and has the shape of a meander, and at least one partial loop of the meander completely surrounds a circular conversion area of the converter (1).

7. Lighting device with a laser diode and a converter assembly according to claim 5 or 6, wherein the laser diode is controlled by means of the output signal (Out) of the circuit device.

8. Lighting device according to claim 7, wherein there are separately connected to supply terminals (Ext_VDD, Ext_GND) an anode of the laser diode via a first semiconductor switching element (X6) controllable by the output signal and a cathode of the laser diode via a second semiconductor switching element (X5) controllable by the output signal (Out) .

9. Lighting device according to claim 8, wherein the first semiconductor switching element (X6) is controlled by the output signal (Out) of the circuit device via an inverter (X2, X4).

10. Lighting device according to claim 8 or 9, wherein a supply of the remaining lighting device is also ensured via the supply terminals of the laser diode.

## Revendications

1. Appareil à circuit, destiné à surveiller un convertisseur optique (1),
**caractérisé par**
- un pont de mesure avec une branche de mesure (13), une première branche de comparaison (14) et une seconde branche de comparaison (15),
- une boucle de pistes (3, X0) du convertisseur pouvant être intégrée dans la branche de mesure (13),
- la première branche de comparaison (14) présentant une première résistance en série, variable par l'intermédiaire d'un premier élément actif (X2),
- la seconde branche de comparaison (15) présentant une seconde résistance en série, variable par l'intermédiaire d'un second élément actif (X1),
- le premier et le second élément actifs (X2, X1) pouvant être commandés respectivement avec un signal de commande identique,
- l'appareil à circuit présentant un circuit d'évaluation avec un premier comparateur (K1) et un second comparateur (K2), dont les sorties configurées ET constituent le signal de commande et simultanément un signal de sortie (Sortie) de l'appareil à circuit,
- le premier comparateur (K1) comparant une prise (1_ref) de la première branche de comparaison (14) avec une prise (pos) de la branche de mesure (13) et
- le second comparateur (K2) comparant une prise (h_ref) de la seconde branche de comparaison (15) avec une prise (pos) de la branche de mesure.

2. Appareil à circuit selon la revendication 1, le premier élément actif (X2) étant un semi-conducteur à oxyde métallique et en particulier un commutateur MOS à canal P.

3. Appareil à circuit selon la revendication 1 ou 2, le second élément actif (X1) étant un semi-conducteur à oxyde métallique et en particulier un commutateur MOS à canal N.

4. Appareil à circuit selon l'une des revendications précédentes, la première branche de comparaison (14) présentant une résistance de référence pour une valeur de seuil inférieure autre que la seconde branche de comparaison (15) pour une valeur de seuil supérieure.

5. Agencement de convertisseur avec un convertisseur optique (1), sur lequel une boucle de pistes (3, X0) est agencée pour sa surveillance et un appareil à circuit selon l'une des revendications précédentes, qui est raccordé à la boucle de pistes (3, X0).

6. Agencement de convertisseur selon la revendication 5, la boucle de pistes (3, X0) étant constituée sur une surface du convertisseur (1) et présentant la forme d'un méandre et au moins une boucle partielle du méandre passant intégralement par une zone de conversion circulaire du convertisseur (1).

7. Dispositif d'éclairage avec une diode laser et un agencement de convertisseur selon la revendication 5 ou 6, la diode laser étant commandée au moyen du signal de sortie (Sortie) de l'appareil à circuit.

8. Dispositif d'éclairage selon la revendication 7, une anode de la diode laser étant commutée par l'intermédiaire d'un premier élément de commutation à semi-conducteur (X6), pouvant être commandé par le signal de sortie et une cathode de la diode laser étant commutée par l'intermédiaire d'un second élément de commutation à semi-conducteur (X5), pouvant être commandé par le signal de sortie (Sortie), séparément aux bornes d'alimentation (Ext_VDD, Ext_GND).

9. Dispositif d'éclairage selon la revendication 8, le premier élément de commutation à semi-conducteur (X6) étant commandé par le signal de sortie (Sortie) de l'appareil à circuit, par l'intermédiaire d'un onduleur (X2, X4).

10. Dispositif d'éclairage selon la revendication 8 ou 9, une alimentation du dispositif d'éclairage supplémentaire étant aussi garantie par l'intermédiaire des bornes d'alimentation de la diode laser.
